# EUROPÄISCHE PATENTSCHRIFT

(11) **EP 3 996 980 B1**
(45) Veröffentlichungstag und Bekanntmachung des Hinweises auf die Patenterteilung: **28.10.2026**
(21) Anmeldenummer: 20743600.7
(22) Anmeldetag: 10.07.2020
(51) Int. Cl.: B62D 65/02, B62D 27/02

(54) **VERFAHREN ZUR HERSTELLUNG EINER BAUGRUPPE**
METHOD FOR MANUFACTURING OF AN ASSEMBLY
PROCÉDÉ DE FABRICATION D'UN ASSEMBLAGE

(30) Priorität: 11.07.2019 DE 102019118821
(43) Veröffentlichungstag der Anmeldung: 18.05.2022
(73) Patentinhaber: VOLKSWAGEN AG, 38440 Wolfsburg (DE)
(72) Erfinder: WESSEL, Oliver, 38530 Didderse (DE)
(74) Vertreter: Gulde & Partner
(86) Internationale Anmeldenummer: PCT/EP2020/069606
(87) Internationale Veröffentlichungsnummer: WO 2021/005220

(56) Entgegenhaltungen:
- CN-A- 108 466 650
- FR-A1- 3 014 344
- GB-A- 612 287
- US-A1- 2006 016 149

## Beschreibung

Die Erfindung betrifft ein Verfahren zur Herstellung einer Baugruppe gemäß dem Oberbegriff des Patentanspruchs 1 und ein Fahrzeug gemäß dem Oberbegriff des Patentanspruchs 5.

Auf dem Gebiet der Montagetechnik, beispielsweise der Montage von Fahrzeugen, wird angestrebt, Baugruppen so zu montieren, dass sie eine Außenoberfläche aufweisen, die von außen betrachtet geometrisch stimmig, insbesondere symmetrisch ist.

Dabei kommt es insbesondere auf den Übergang zwischen verschiedenen Teilen an sowie auf die Symmetrie der Baugruppe insgesamt.

Konventionell erfolgt die Montage von Baugruppen häufig nach dem sogenannten Referenzpunktaufbau, bei dem Bauteile an definierten und oft im Innern der Baugruppe verborgenen Referenzpunkten ausgerichtet werden.

Hierdurch können sich, bedingt durch Toleranzketten der Einzelteile, eine von außen sichtbare Unstetigkeit in der Außenoberfläche ergeben, obwohl die Teile in Bezug auf die innenliegenden Referenzpunkte korrekt ausgerichtet sind.

Die eingangs genannten Ziele können daher konventionell kaum erreicht werden.

FR 3 014 344 A1 offenbart ein Verfahren zur Positionierung eines Fahrzeugdachs an einer Fahrzeugkarosserie. Das Fahrzeugdach wird hierzu mit beidseitigen Anlageaufschnitten in eine durch zwei Karosserieteile gebildete Aussparung eingebracht. Die Karosserieteile weisen zueinander konisch verlaufende Auflageflächen auf, die zur Positionierung des Fahrzeugdaches dienen.

Der Erfindung liegt nun die Aufgabe zugrunde, eine technische Lösung zu finden, mit der die beschriebenen Probleme vermieden werden.

Die Aufgabe wird durch die Gegenstände der unabhängigen Patentansprüche 1 und 5 gelöst. Weitere bevorzugte Ausgestaltungen der Erfindung ergeben sich aus den übrigen, in den Unteransprüchen genannten Merkmalen.

Ein erster Aspekt der Erfindung betrifft ein Verfahren zur Herstellung einer Baugruppe, in dem ein Aufbau einer Außenoberfläche der Baugruppe erfolgt, indem ein erstes Bauteil und wenigstens ein zweites Bauteil relativ zueinander angeordnet werden.

Erfindungsgemäß ist vorgesehen, dass die Anordnung derart erfolgt, dass sich ein durch das zweite Bauteil gebildeter zweiter Teilbereich der Außenoberfläche als virtuelle Verlängerung eines von dem ersten Bauteil gebildeten ersten Teilbereichs der Außenoberfläche am Übergangsbereich der Teilbereiche tangential an den ersten Teilbereich anschließt.

Hierdurch wird vorteilhaft erreicht, dass die Außenoberfläche auch an den Übergangsbereichen stetig verläuft und insbesondere an Radien und Kurven keine Sprungstellen aufweist. Die bereits montierten Teile werden dabei als Führungsschablone für nachfolgende Teile verwendet, sodass keine zusätzlichen Hilfsmittel erforderlich sind.

Mit anderen Worten erfolgt die Montage analog zum Karosseriebau oder auch zum Rohrbau, wo beispielsweise Rohrsegmente sukzessiv aneinandergesetzt werden und das jeweilige vorhergehende Segment das nachfolgende geometrisch führt.

In bevorzugter Ausgestaltung des Verfahrens der Erfindung ist vorgesehen, dass die verbundenen Bauteile derart angeordnet werden, dass die Außenoberfläche in Bezug auf eine Symmetrielinie der Baugruppe symmetrisch ist.

Zur Definition der Symmetrielinie, die zwischen wenigstens zwei Punkten verläuft, werden vorzugsweise von der späteren Baugruppe zurückgespiegelte beziehungsweise von außen her wahrnehmbare Symmetriepunkte verwendet, wie zum Beispiel ein bestimmtes Seitenteil eines Fahrzeugs, wie die A-Säule. Solche Teile sind am Fahrzeug besonders gut wahrnehmbar und haben entsprechenden Einfluss auf die Symmetrie des Erscheinungsbildes.

Werden mehrere Baugruppen montiert, werden zweckmäßigerweise immer dieselben Symmetriepunkte verwendet.

In weiterhin bevorzugter Ausgestaltung des Verfahrens der Erfindung ist vorgesehen, dass die Symmetrielinie eine Mittelachse ist.

In weiterhin bevorzugter Ausgestaltung des Verfahrens der Erfindung ist vorgesehen, dass die hergestellte Baugruppe ein Fahrzeug ist.

Weitere Beispiele für Teile, die zur Herstellung des Fahrzeugs montiert werden, umfassen Leuchten, Schalttafeln, Heckklappen, Türverkleidungen oder auch Mittelkonsolen.

Ein weiterer Aspekt der Erfindung betrifft ein Fahrzeug, hergestellt in einem erfindungsgemäßen Verfahren gemäß der vorhergehenden Beschreibung.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erfindungsgemäßes Verfahren zur Herstellung einer Baugruppe;
- Figur 2: innenliegende Referenzpunkte und sichtbare Symmetriepunkte einer erfindungsgemäßen Baugruppe; und
- Figur 3: ein Seitenteil als virtuelle Verlängerung eines Kotflügels.

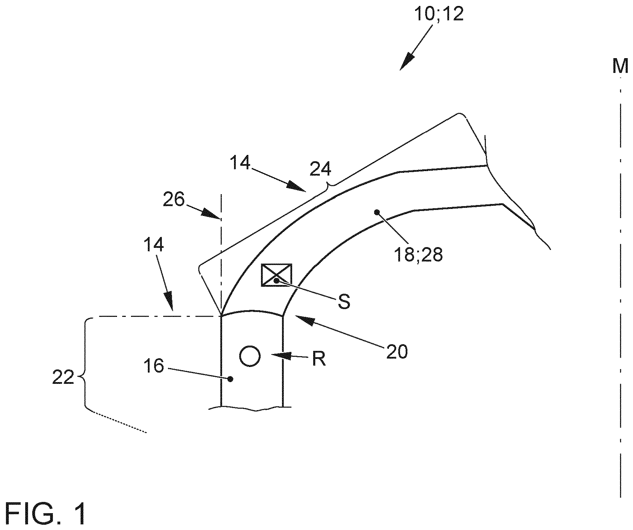

Figur 1 zeigt abschnittsweise eine herzustellende Baugruppe 10, bei der es sich exemplarisch um ein Fahrzeug 12 handelt.

Eine Außenoberfläche 14 der Baugruppe 10 soll dabei aufgebaut werden, indem ein erstes Bauteil 16 und wenigstens ein zweites Bauteil 18 relativ zueinander angeordnet werden.

Das erste Bauteil 16 und das zweite Bauteil 18 weisen einen Übergangsbereich 20 auf, in dem sie aneinander angrenzen. Entsprechend bildet das erste Bauteil 16 einen ersten Teilbereich 22 der Außenoberfläche 14 und das zweite Bauteil 18 bildet einen zweiten Teilbereich 24 der Außenoberfläche 14.

Die Anordnung der Bauteile 16, 18 erfolgt nun derart, dass sich der durch das zweite Bauteil 18 gebildete zweite Teilbereich 24 der Außenoberfläche 14 als virtuelle Verlängerung 26 des von dem ersten Bauteil 16 gebildeten ersten Teilbereichs 22 der Außenoberfläche 14 am Übergangsbereich 20 der Teilbereiche 22, 24 tangential an den ersten Teilbereich anschließt.

Die Bauteile 16, 18 werden während der Montage zunächst an Referenzpunkten R eingespannt. Zur Abstimmung der Symmetrie der Baugruppe 10 insgesamt wird jedoch die Außenoberfläche 14 in Bezug auf eine Symmetrielinie M der Baugruppe 10 als Referenz verwendet, bei der es sich im vorliegenden Beispiel um eine Mittelachse handelt. Dargestellt ist hier nur der Teil der Baugruppe 10, der sich links der Symmetrielinie M befindet.

Zur Definition der Symmetrielinie M werden nicht die Referenzpunkte R, sondern von der späteren Baugruppe 10 zurückgespiegelte beziehungsweise von außen her gut wahrnehmbare Symmetriepunkte S verwendet, wie zum Beispiel ein Seitenteil 28 eines Fahrzeugs. Ein solcher Symmetriepunkt S ist vorliegend exemplarisch dargestellt.

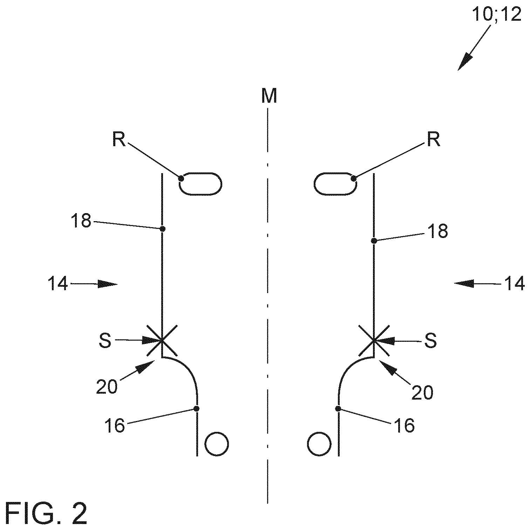

Figur 2 zeigt nochmals anhand einer Baugruppe 10, die beispielsweise wie in Figur 1 beschrieben montiert worden sein kann, den Unterschied zwischen innenliegenden und nicht sichtbaren Referenzpunkten R und den zur Abstimmung der Symmetrie der Außenoberfläche 14 der gesamten Baugruppe 10 sichtbaren und daher relevanten Symmetriepunkte S. Auch ist zwischen jeweils aneinander montierten ersten Teilen 16 und zweiten Teilen 18 jeweils ein Übergangsbereich 20 gezeigt, der wie zuvor beschrieben stetig verläuft.

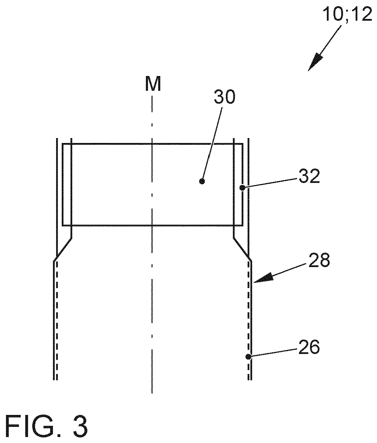

Figur 3 zeigt am Beispiel eines Fahrzeugs 12 als Baugruppe 10 im Bereich einer Frontklappe 30 wie ein Kotflügel 32 montiert wird.

Der Kotflügel 32 wird dabei so ausgerichtet, dass ein Seitenteil 28 als virtuelle Verlängerung 26 fungiert.

### Bezugszeichenliste

- 10: Baugruppe
- 12: Fahrzeug
- 14: Außenoberfläche
- 16: erstes Bauteil
- 18: zweites Bauteil
- 20: Übergangsbereich
- 22: erster Teilbereich
- 24: zweiter Teilbereich
- 26: virtuelle Verlängerung
- 28: Seitenteil
- 30: Frontklappe
- 32: Kotflügel

- M: Symmetrielinie
- R: Referenzpunkten
- S: Symmetriepunkte

## Patentansprüche

1. Verfahren zur Herstellung einer Baugruppe (10), in dem ein Aufbau einer Außenoberfläche (14) der Baugruppe erfolgt, indem ein erstes Bauteil (16) und wenigstens ein zweites Bauteil (18) relativ zueinander angeordnet werden,
**dadurch gekennzeichnet, dass**
die Anordnung derart erfolgt, dass sich ein durch das zweite Bauteil (18) gebildeter zweiter Teilbereich (24) der Außenoberfläche (14) als virtuelle Verlängerung (26) eines von dem ersten Bauteil (16) gebildeten ersten Teilbereichs (22) der Außenoberfläche (14) am Übergangsbereich (20) der Teilbereiche (22, 24) tangential an den ersten Teilbereich (22) anschließt, wobei das bereits montierte erste Bauteil (16) als Führungsschablone für das nachfolgend montierte zweite Bauteil (18) verwendet wird und wobei die Außenoberfläche (14) an den Übergangsbereichen (20) stetig verläuft und an Radien und Kurven keine Sprungstellen aufweist.

2. Verfahren nach Anspruch 1, **dadurch gekennzeichnet, dass** die verbundenen Bauteile (16, 18) derart angeordnet werden, dass die Außenoberfläche (14) in Bezug auf eine Symmetrielinie (M) der Baugruppe symmetrisch ist.

3. Verfahren nach Anspruch 2, **dadurch gekennzeichnet, dass** die Symmetrielinie (M) eine Mittelachse ist.

4. Verfahren nach einem der vorhergehenden Ansprüche, **dadurch gekennzeichnet, dass** die hergestellte Baugruppe (10) ein Fahrzeug (12) ist.

## Claims

1. Method for manufacturing an assembly (10) in which an outer surface (14) of the assembly is built up by arranging a first component (16) and at least one second component (18) relative to each other,
**characterized in that**
the arrangement is such that a second sub-area (24) of the outer surface (14) formed by the second component (18) as a virtual extension (26) of a first sub-area (22) of the outer surface (14) formed by the first component (16) connects tangentially to the first sub-area (22) at the transition area (20) of the sub-areas (22, 24), the already mounted first component (16) being used as a guide template for the subsequently mounted second component (18) and the outer surface (14) running continuously at the transition areas (20) and having no discontinuities at radii and curves.

2. Method according to claim 1, **characterized in that** the connected components (16, 18) are arranged such that the outer surface (14) is symmetrical with respect to a symmetry line (M) of the assembly.

3. Method according to claim 2, **characterized in that** the symmetry line (M) is a central axis.

4. Method according to any of the preceding claims, **characterized in that** the manufactured assembly (10) is a vehicle (12).

## Revendications

1. Procédé pour la fabrication d'un ensemble (10), dans lequel le montage d'une surface extérieure (14) de l'ensemble est effectuée en agençant un premier composant (16) et au moins un second composant (18) l'un par rapport à l'autre,
**caractérisé en ce que**
l'agencement est effectué de telle sorte qu'une seconde zone partielle (24) de la surface extérieure (14) formée par le second composant (18) en tant que prolongement virtuel (26) d'une première zone partielle (22) de la surface extérieure (14) formée par le premier composant (16) se raccorde de manière tangentielle à la première zone partielle (22) au niveau de la zone de transition (20) des zones partielles (22, 24), dans lequel le premier composant (16) déjà monté est utilisé comme gabarit de guidage pour le second composant (18) monté par la suite, et dans lequel la surface extérieure (14) s'étend de manière continue au niveau des zones de transition (20) et ne présente aucune discontinuité au niveau des rayons et des courbes.

2. Procédé selon la revendication 1, **caractérisé en ce que** les composants (16, 18) reliés sont disposés de telle sorte que la surface extérieure (14) est symétrique par rapport à une ligne de symétrie (M) de l'ensemble.

3. Procédé selon la revendication 2, **caractérisé en ce que** la ligne de symétrie (M) est un axe central.

4. Procédé selon l'une des revendications précédentes,
**caractérisé en ce que** l'ensemble (10) fabriqué est un véhicule (12).
